(19) Europäisches Patentamt
European Patent Office
Office européen des brevets

(11) Publication number: **0 123 577**
**B1**

# (12) EUROPEAN PATENT SPECIFICATION

(45) Date of publication of patent specification: **03.06.87**

(51) Int. Cl.[4]: **C 09 B 69/00**, C 09 C 3/08, C 09 C 1/36, C 09 C 1/30, C 09 C 1/40

(21) Application number: **84400555.3**

(22) Date of filing: **20.03.84**

## (54) Silanic phtalocyaninic dyes and composite pigments.

(30) Priority: **22.03.83 IT 2019983**

(43) Date of publication of application:
**31.10.84 Bulletin 84/44**

(45) Publication of the grant of the patent:
**03.06.87 Bulletin 87/23**

(84) Designated Contracting States:
**BE DE FR GB NL**

(56) References cited:
**US-A-3 981 859**

(73) Proprietor: **Montedison S.p.A.**
**31, Foro Buonaparte**
**I-20121 Milan (IT)**

(72) Inventor: **Marraccini, Antonio**
**4 Corso Riviera**
**Dormelletto (Novara) (IT)**
Inventor: **Carlini, Filippo Maria**
**7 Corso Torino**
**I-28100 Novara (IT)**
Inventor: **Pasquale, Antonio**
**8 Corso Milano**
**I-28100 Novara (IT)**
Inventor: **Maranzana Giorgio**
**51 Via Fara**
**I-28100 Novara (IT)**

(74) Representative: **Hirsch, Marc-Roger**
**Cabinet Hirsch 34 rue de Bassano**
**F-75008 Paris (FR)**

**EP 0 123 577 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention concerns a new type of phthalocyanine-based dyes containing, in a chemical combination, at least one silanic group and the corresponding composite silanic non-flocculating pigments, stable to crystallization and obtainable through association of said dyes with a solid inorganic substrate.

It is known that the phthalocyanine-based pigments, in particular those based on copper phthalocyanine, in the metastable forms named alpha, gamma, delta, epsilon, present the drawback of crystallizing in the presence of solvents, in particular of aromatic solvents, and that, moreover, the above cited metastable forms have the tendency to convert to the stable form beta, a phenomenon that is accompanied by a change in tone, by an increase of the particle size of the pigment and consequently by a considerable decrease in dyeing power.

The crystals of the beta form, under the action of heat or of the crystallization solvents, tend to grow, with consequent loss of dyeing power, modification of the pigmentary properties and increase of the viscosity of the medium into which they are incorporated.

A further serious drawback of such phthalocyanine-based pigments, in particular of those metallized with copper, is their tendency to flocculate, with consequent poor dripping properties of the corresponding dispersions, or separation or settling of the pigment from varnishes containing two or more pigments, in particular from non-aqueous dispersion systems of a weak viscosity such as those for varnishes and inks.

Silanic phthalocyanine-based dyes suited for providing composite silanic pigments have now revealed to be free of the above listed drawbacks.

USP 3 981 859 which was cited in accordance with rule 27(1)(c)(d) EPC in the search report refers to silicone-containing dyestuffs that are compatible with silicone polymers containing the tris(trimethylsilyloxy)silylalkylamino group.

This document in no case relates to the phthalocyamine dyes containing at least one silanic group wherein each of the four benzenic rings of the phthalocyamine is bound to only one single sulphonic or sulphonamidic group from the formula of said dyes.

In the description following hereunder, the term or expression "composite silanic pigment" means a pigmentary material consisting of an association of phthalocyanine-based dyes containing at least one silanic group with a solid inorganic substrate or support.

The above-mentioned association of phthalocyanine-based dye, containing at least one silanic group, or silanic phthalocyanine-based dye, with a solid substrate, results in conferring on said silanic dye a pigmentary nature.

Such association is achieved through the formation of chemical bonds (graftings), between the silanic portion of the dye and the inorganic substrate.

Thus, one object of the present invention is to provide silanic phthalocyanine-based dyes suitable for providing pigments with excellent characteristics, in particular being non-flocculating and being stable under crystallization.

Still other objects concern the preparation of said dyes and pigments by means of simple and inexpensive methods.

All these and further objects, which will appear more clearly from the detailed description that follows, will be achieved by the silanic phthalocyanine-based dyes and by the composite silanic pigments derivable by grafting said dyes on the surface of an inorganic substrate, and by the respective processes of preparation.

Thus, the object of the present invention are phthalocyanine-based dyes containing at least one silanic group of the formula:

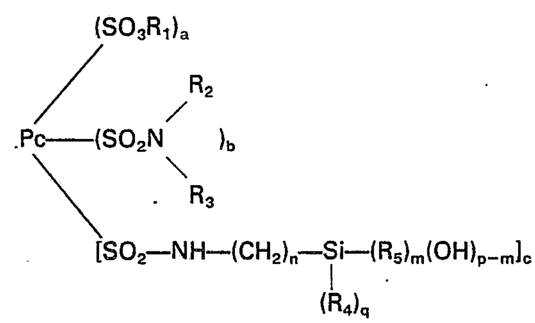

(I)

wherein:

Pc is the residue of the non metallized or metallized phthalocyanine;

$R_1$ is a hydrogen atom or an alkaline metal;

$R_2$ and $R_3$, which may be equal or different, are H, alkyls having up to 4 carbon atoms, cycloalkyls or aryls;

$R_4$ is a $C_1$—$C_4$ alkyl or phenyl;

$R_5$ is a $C_1$—$C_4$ alkoxyl;
*n* is 3, 4 or 5;
*q* is 0, 1;
*p* and *m* are integers so that when q is 0, p is 3 and m is 0, 1, 2, 3 and that when q is 1, p is 2 and m is 0, 1, 2;
a and c are numbers comprised between 1 and 3; and
b is a number comprised between 0 and 2, chosen in such a way that the sum of a+b+c will be ≦4;
and wherein each of the four benzenic rings of the phthalocyanine is bound to only one single sulphonic (—$SO_3R_1$) or sulphonamidic group.

The phthalocyanine-based residue is preferably metallized with a metal chosen from among Co, Ni, Cu.

They are prepared by means of a process consisting in reacting a chloride of a phthalocyanine-sulphonic acid of the formula:

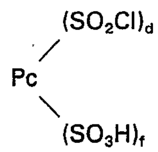

(II)

wherein:
Pc has the meaning given to it herein-above;
f is a number comprised between 0 and 2;
d is a number comprised between 2 and 4;
f and d, being chosen in such a way that their sum is lower than or equal to 4, with a compound of the formula:

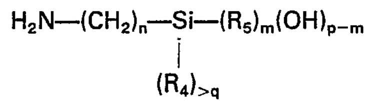

(III)

wherein:
n, $R_4$, $R_5$, q, m and p have each the meaning given to them hereinabove, and possibly with a compound of the formula:

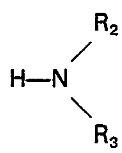

(IV)

wherein:
$R_2$ and $R_3$ have the meaning given to them herein-above, according to a molar ratio (II):(III) comprised between 1 and 4, and possibly according to a molar ratio between compound (IV) and compound (II) comprised between 1 and 10, in a reaction medium consisting of water and/or organic solvents, at a temperature comprised between 5°C and the reflux temperature of the reaction medium, for 1 to 12 hours.

The reaction may possibly be carried out in the presence of a hydrochloric acid acceptor compound such as $Na_2CO_3$, $NaHCO_3$, triethylamine or pyridine.

The possible —$SO_2Cl$ groups present at the end of the reaction can be successively hydrolized to free sulphonic groups or they may be salified. The reaction can be carried out in an aqueous suspension, in organic solvents or in mixtures of water and water-mixable organic solvents. Water-mixable solvents such as: dimethylformamide, dioxane, acetonitrile, may be used as well as the water-unmixable ones such as: xylene, dichlorobenzene.

The chlorinated derivatives from phthalocyaninosulphonic acids of formula (II) may be prepared according to substantially conventional methods, for instance, by treatment of the phthalocyanine with chlorosulphonic acid or by chlorination of phthalocyanine-sulphonic acid, possibly in the presence of thionyl of sulphoryl chloride or of phosphorous pentachloride or trichloride.

As silanic compounds of formula (III) proved particularly appropriate those derived from amino-alkoxy-silanes, such as for instance gamma-aminopropyl-triethoxysilane, delta-amino-butyl-triethoxysilane, delta-aminobutyl-phenyl-diethoxysilane, gamma-aminopropyl-methyl-diethoxy-silane. Said amino-alkoxy-silanes are known compounds, available on the market.

They can, however, also be prepared, according to conventional techniques, for instance, by reaction of the corresponding chloroalkoxy-silanes with aliphatic amines.

As amines of formula (IV) may be used for instance ammonia, methylamine, ethylamine, propylamine, benzylamine, aniline, morpholine, cyclohexylamine.

The silanic phthalocyanine-based dyes of formula (I) possess a fair solubility in organic and aqueous solvents. They have a satisfactory dyeing power and have proved suitable for the dyeing of natural fibres such as wool and cotton, according to techniques commonly used for acid or substantive dyes, giving dyeings of a pure tone, and showing characteristics of good overall fastness and excellent photostability.

The silanic phthalocyanine-based dyes of formula (I), since they contain in their molecular silanolic and/or alcoxylic groups hydrolizable to silanolic groups —$Si(OH)_3$, are capable of both autocondensing, by reaction between the above-indicated silanolic groups, as well as chemically reacting with surface hydroxyl groups of suitable inorganic substrates which condense with those of the dye thus forming a stable chemical bond (grafting) between the dye and the substrate and giving rise to a composite product having pigmentary characteristics.

The above-mentioned dyes thus have a preferential use in the preparation of composite pigments, and this constitutes a further object of the present invention, said composite pigments consisting of the silanic phthalocyanine-based dyes of formula (I) grafted on an inorganic support.

Particularly suitable for the preparation of composite pigments are the silanic dyes of the formula:

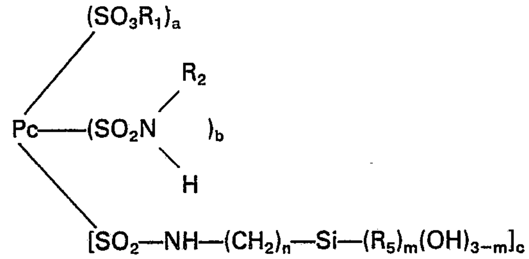

wherein:

Pc is the residue of the phthalocyanine metallized with Cu, Ni, Co;

$R_2$ is H, methyl, ethyl, propyl;

$R_5$, $R_1$, $R_2$, a, b, c, n and m have the meaning previously given to them.

As inorganic substrates or carriers, particularly suitable for conferring the pigmentary nature on the silanic phthalocyanine-based dyes of formula (I), are conveniently used the following: $TiO_2$, in its gel, semi-crystalline, rutile or anatase forms, and of the commercial type, in which there may be present surface coatings, consisting of mixtures of one or more oxides chosen from among: $SiO_2$, $Al_2O_3$, $TiO_2$. Furthermore, physical mixes may be used of $TiO_2$ with $SiO_2$ and/or $Al_2O_3$ as well as $SiO_2$ and/or $Al_2O_3$, finely particulated. Because of their superior characteristics mixed substrates of $TiO_2$, $SiO_2$ and/or $Al_2O_3$ obtained by precipitation of $SiO_2$ and/or $Al_2O_3$, also as alumino-silicates, on crystalline $TiO_2$ particles, prepared according to conventional methods, are preferred.

Depending on the intended use and the desired degree of hiding power, the above-mentioned substrates may also be used in admixture with each other.

The specific surface area of said substrates may vary within a wide range, from 5 to 500 $m^2/g$, but preferably comprised between 10 and 200 $m^2/g$.

Particularly preferred for their superior characteristics, are the composite dyes containing from 10 to 50% by weight of the silanic phthalocyanine-based dye of formula (I) in the grafted form.

The process for the preparation of the composite pigments consisting of the silanic phthalocyanine-based dyes of formula (I) grafted on the above-mentioned inorganic substrates, consists in treating the selected substrate with a silanic dye (I), in a reaction medium consisting of water and/or inert organic solvents, at a temperature comprised between 20°C and the reflux temperature of the reaction medium, and then separating by filtering the obtained product, washing it and drying it.

The reaction is carried out over a period of 2—12 hours, but preferably over a period from 4 to 8 hours, depending on the reaction temperature.

Particularly convenient results are achieved when the composite pigment, separated by filtering, is subjected to a dry thermal treatment in a stove for 4—8 hours at a temperature comprised between 60° and 110°C, before washing, for instance with water, in order to remove the ungrafted silanic dye.

In order to improve the condensation of the dye coating on the substrate, operating may be carried out in the presence of catalysts such as: LiOH, $CF_3COOH$, Pb acetate, cobalt naphthenate.

Further advantages may be achieved if the above-mentioned process is carried out in the presence of tetra-alkoxysilanes having up to 4 carbon atoms, such as $Si(OCH_3)_4$ or vinyl-triethoxysilane with the formula $_2HC{=}CH{-}Si{-}(OC_2H_5)_3$, or alkyl-ortho-titanates such as $Ti(OC_4H_9)_4$, in amounts ranging from 0,1:1 to about 1:1 by weight, with respect to the dye of formula (I), with which they form insoluble copolymers. which are particularly suitable for coating the substrate.

As inert organic solvents may be used aliphatic hydrocarbons (n-heptane) and their chlorinated derivatives (tetrachloroethane), alicyclic and aromatic hydrocarbons (benzene, toluene, xylenes, nitrobenzene, chlorobenzenes), the alkyl or aryl ethers and ketones (N-methylpyrrolidone, diphenylether), the oxides (dioxane), the amides (dimethylformamide), the nitriles (acetonitrile), and the sulphoxides (dimethylsulphoxide).

The preparation process, object of the present invention, is particularly suitable for obtaining deeply dyed pigments having a high dyeing power, also in the presence of inorganic substrates having a low specific surface, such as for instance the highly hiding $TiO_2$.

The composite pigments of this invention may have a composition varying within a wide range, depending on the nature, granulometry and specific surface of the substrate particles, and depending on the dyeing force desired for the pigment.

The granulometric examination of the composite pigment shows that the organic part is essentially distributed on the surface of the inorganic substrate particles.

X-ray diffractometric examination shows that the particles of the composite pigment have the characteristic crystallinity of the substrate, while the grafted phthalocyanine-based coating proves to be of an amorphous nature.

The phthalocyanine-based pigments of the present invention, due to the composite nature achieved through chemical bonds between the silanic organic portion and the inorganic portion, do not give rise to the crystallization phenomenon, nor do they change the crystalline form when in contact with aromatic solvents, even under heat.

Moreover, the solvent-based pigmentary compositions, such as those used for printing inks, do not cause any settling phenomena, not even after prolonged storage.

They thus represent an innovating and original solution to the problem of obtaining phthalocyanine-based pigments that are stable against crystallization and that are not flocculating.

The above-mentioned pigments offer, moreover, excellent pigmentary characteristics, are insoluble in the common organic and aqueous solvents, and show excellent fastness characteristics to migration in polyvinylchloride (P.V.C.), to overpainting in alkydic stove enamels and to acid or alkaline treatments. They are pigments of an excellent photostability (light fastness), with good dyeing power, fastness to heat both when obtained in a transparent form as well as with growing degrees of hiding power.

Thus, said pigments have a selective use in painting products, in air drying and oven cured enamels, in the pigmentation of plastic materials such as PVC, polystyrene, polyethyleneterephthalate, etc., in printing inks, with conventional applicative techniques.

The mechanical and/or heat treatments used in the above-mentioned conventional techniques, do not modify substantially the pigmentary characteristics of the composite pigments of the present invention.

Said composite pigments offer the substantial advantage of consisting of a low cost inorganic portion or substrate, and capable of conferring excellent pigmentary characteristics, among which, in particular, the desired degree of hiding power, excellent resistance to solvents, stability against crystallization and non-flocculating character, on which substrate a silanic phthalocyanine-based dye, endowed with excellent light fastness, high dyeing power and pure tone is grafted.

The invention will now be described in more detail in the following set of examples, which are given for purely illustrative purposes without in any way limiting the scope of the present invention.

Example 1

A reactor containing 100 ml of chlorosulphonic acid, loaded at room temperature with 10 parts (0.0173 mols) of a 98% copper phthalocyanine, was heated to 140°C for 4—5 hours, then cooled to 70°—80°C, loaded with 9 ml of thionyl chloride and then maintained for 6—7 hours at a temperature of 70°—80°C.

The reaction mixture thus obtained was drowned in 1150 parts of a water-ice mixture at 0°—5°C, then filtered and the resulting cake was thereupon washed. 87.5 parts of a humid cake were thus obtained which under analysis turned out to consist of chlorosulphonic derivative of the copper phthalocyanine, containing about 3 $—SO_2Cl$ groups and about 1 $—SO_3H$ group per mol of phthalocyanine.

30.6 parts of the cake thus obtained, corresponding to 0.0059 mols of phthalocyanine, were then loaded into a reactor containing 70 ml of pyridine, the cake was then additioned with 3.94 parts (0.0178 mols) of gamma-aminopropyl-triethoxysilane and then gradually heated to 60°C for 3—4 hours, whereafter it was cooled to room temperature and finally additioned with 300 ml of methanol. By filtering, a cake was obtained which, washed with water and ethanol, after drying at room temperature, yielded a bluish-green colour powder which upon analysis gave the following results:

| | |
|---|---|
| C=38.5% | S=9.5% |
| H=3.8% | Cu=4.9% |
| N=12% | Si=6.8% |

and which corresponded to a product essentially consisting of the silanic dye of the formula:

$$CuPc \begin{cases} SO_3H \\ [SO_2NH—(CH_2)_3—Si(OH)_3]_3 \end{cases}$$

Said dye may also be partially present in a polymeric form through the formation of siloxanic —Si—O—Si— bonds between the silanolic functions $—Si(OH)_3$ present in the molecule.

The dye thus prepared was hardly soluble in neutral or acid water, even under heat, while on the contrary, it was soluble in alkaline water giving a green dyeing as well as soluble under heat in dimethylformamide.

Under X-ray examination the dye proved completely amorphous and, formulated in an alkydic stoving enamel, gave a product that in bulk turned out to be green colour with a heavy blue hue when diluted with $TiO_2$.

Said dye turned out to be suitable for the dyeing of natural fibres such as wool and cotton, to which it is applied according to the procedural techniques commonly used for acid or substantive dyes, giving products of a turquoise colour, characterized by good overall fastness and by excellent light fastness (photostability).

Example 2

82.4 parts (0.0155 moles) of an aqueous cake of sulphochlorinated copper phthalocyanine, obtained according to the procedures followed in example 1, were dispersed in 600 parts of water and then additioned, at temperatures below 5°C, with 2.3 parts of $NaHCO_3$ until the pH value was brought to 7.

The thus obtained suspension, additioned with 4.29 parts of gamma-aminopropyl-triethoxysilane (0.0193 mols) and successively with 1.3 parts (0.0192 mols) of methylamine chlorohydrate, was allowed to react at temperature comprised between 5°C and 10°C, at a pH equal to 9.5—10.5, maintained by the addition of a 10% NaOH.

The temperature was then allowed to rise spontaneously to room temperature and then to 40°C where it was maintained for 1—2 hours, after which it was filtered.

The cake thus obbained was mashed in water acidified with HCl, it was then again filtered and dried at room temperature. A greenish-blue product was obtained which, upon elementary analysis gave the following results:

| | |
|---|---|
| C=42.73% | S=12% |
| H=3% | Cu=6.28% |
| N=14% | Si=2.68% |

which corresponded to a product substantially consisting of the silanic dye of the formula:

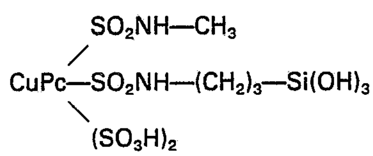

Said dye may be partially in the form of a polymer, analogously with the dye obtained according to Example 1.

Its characteristics of solubility and its diffractometric characteristics as well as the overall fastness characteristics of the turquoise colour products obtained in the stoving enamel applications and in the dyeing of natural fibres, are analogous to those obtained for the dye of Example 1.

Example 3

10 parts (0.0175 mols) of nickel phthalocyanine were sulphochlorinated with 100 ml of chlorosulphonic acid and 9 ml of thionyl chloride, according to the procedures followed in Example 1. After filtering and washing, 102.5 parts of an aqueous cake consisting of the sulphochlorinated derivative of the nickel phthalocyanine, containing about 3 groups $—SO_2Cl$ and 1 group $—SO_3H$ per mol were obtained.

89 parts (0.0152 mols in phthalocyanine) of above-mentioned cake, mashed in 300 parts of water together with 3.5 ml of NaOH at a 30% concentration and 5 parts of $NaHCO_3$, were additioned with 3.36 g (0.0152 mols) of gamma-aminoproyl-triethoxysilane at temperatures comprised between 10° and 20°C.

The basic pH was maintained by the addition of 4 parts of $NaHCO_3$ added in successive portions, then, after 30 minutes, 3.09 parts (0.0457 mols) of methylamine chlorohydrate were admixed.

This reaction mixture was maintained over-night at room temperature, whereafter it was heated at 40°C for 6 hours, then filtered. The filtration cake was then diluted with water, acidified, again filtered and washed with water and methanol until a neutral pH was achieved. After drying at room temperature, a deep green colour powder was obtained which upon elementary analysis gave the following results:

| | |
|---|---|
| C=40.3% | S=11.5% |
| H=2.66% | Ni=5.43% |
| N=12.88% | Si=2.9% |

to which probably corresponds a product essentially consisting of the silanic dye of the formula:

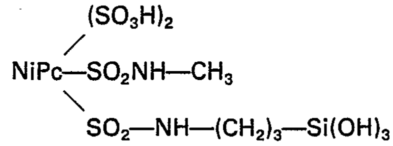

Said dye may be present partially in the form of a polymer analogously to the dye obtained according to the procedures of Example 1. Under X-ray examination it revealed completely amorphous and, in alkydic stoving enamels and in the dyeing of natural fibres, it provides a green colour product characterized by good overall fastness.

Example 4

A composite silanic phthalocyanine pigment was prepared in the following way using an inorganic mixed substrate of $TiO_2$, $SiO_2$ and $Al_2O_3$: 100 pts. of $TiO_2$ were dispersed under mechanical stirring in 1 lt. of water and this dispersion was then heated to 60°C. After 15 minutes of stirring, 210 ml of a sodium silicate solution (titre: 365.47 pts/lt of $SiO_2$) was additioned and successively were added, over a period of about 3 hours, about 200 ml of an aluminum sulphate solution (titre: 60 parts/lt of $Al_2O_3$).

The additioning was interrupted when the pH of the slurry attained the value of 6. The reaction mass was then kept under stirring for 1 hour, after which it was filtered, washed with water in order to remove the soluble salts, and finally dried at a temperature of 70°C.

The dried product was thereupon crushed and ground in an automatic mortar. A white powder (A) was obtained which revealed the following elementary composition:

$TiO_2$=43.4%    $Al_2O_3$=7.15%
$SiO_2$=35.1%    $H_2O$=14.35%

and had a specific surface, at the "Sorptometer", of 120 sq. mt/g, a real specific weight of 2.74 g/ml an apparent specific weight of 0.69 g/cc, a porosity of 7.45% and a total porosity of 1.06 ml/g.

The composite silanic phthalocyanine pigment was prepared by introducing 0.75 parts of the dye obtained according to Example 1, and 1.75 parts of substrate (A) obtained as indicated above, into a reactor containing 30 ml of dimethylformamide (DMF) and 0.5 parts of water. The reaction mixture was then heated at reflux temperature for 6 hours. Thereupon it was evaporated to 1/3 of its volume, restored with xylene and maintained under reflux for a further 2 hours.

After cooling to room temperature, the mixture was filtered and the cake thus obtained was washed with n-heptane and then treated overnight in an oven at 110°C. After a hot washing with a 50% DMS/xylene mixture and subsequent drying, a composite pigment was obtained consisting of a deep green coloured power which under analysis gave the following results:

Inorganic ashes=63.44%    N=4.63%
C=14.7%    Cu=1.7%
H=2.3%

Said powder proved to be particularly fast, even under heat, to treatments with organic solvents or with water. When used in alkydic stoving enamels and in polyvinyl chloride, it gives products of a green colour with blue tones, said products possessing a good dyeing power, and excellent hiding power, an excellent fastness to overpainting and to migration as well as an excellent fastness to light, both when in bulk as well as when diluted with $TiO_2$.

The powdery composite pigment, under X-ray diffractometric examination, Cuk-alpha 1.5418 radiation, revealed to consist of particles with a crystallinity characteristic for $TiO_2$ rutile, while no crystalline band of the $SiO_2$, of $Al_2O_3$ and of the phthalocyanine-based coating is visible and thus they proved to be amorphous.

Example 5

For this example the preparation of the composite pigment of Example 4 was repeated, but using as medium in the reaction between the dye of Example 1 and substrate (A), xylene instead of dimethylformamide and water.

The product thus obtained, at the analysis, showed the following results:

Inorganic ashes=62.16%    N=4.52%
C=13.95%    Cu=1.74%
H=2.3%

The powdery pigment possesses diffractometric, pigmentary, hiding and general fastness characteristics analogous to those of the pigment obtained according to Example 4, with a green shade still deeper and brighter.

Example 6

0.8 parts of the dye obtained according to Example 1, were introduced into a reactor together with 70 parts of water, 1 part of $TiO_2$ and 2.1 ml of a sodium silicate solution (titre: in $SiO_2$=365.47 parts/lt).

The suspension was heated to 60°C and, under stirring, was additioned in 3 hours with 2 ml of an aluminum sulphate solution (titre in $Al_2O_3$=60 parts/lt), maintained at 60°C for one hour and then cooled to room temperature.

After filtering, the cake thus obtained was washed with water until a neutral pH was achieved, then dried in an oven at 110°C overnight, then repeatedly washed with hot water and finally dried.

In this way, a green-blue colour powder was obtained which upon analysis showed the following results:

| | |
|---|---|
| Inorganic ashes=79.18% | N=2.11% |
| C=6.4% | Cu=2.19% |
| H=1.78% | |

while at the X-ray examination showed a crystallinity analogous to that of the pigment obtained in Example 4.

When applied to stoving enamels, it gives products with pigmentary characteristics and of general fastness analogous to those of the product of Example 4, but of a blue colouring with a green tone and weaker hiding power.

Example 7

0.8 parts of the dye obtained in Example 1 were introduced into the reactor together with 70 parts of water, 4.2 ml of a sodium silicate solution (titre in $SiO_2$=365.47 parts/lt).

This suspension was thereupon heated to 60°C and, under stirring, was additioned in 3 hours with 4 ml of an aluminum sulphate solution (titre in $Al_2O_3$=60 pts. per litre), maintained at 60°C for one hour and then cooled to room temperature.

After filtering, the cake thus obtained was washed with water until a neutral pH was achieved, was then dried at 110°C in an oven overnight, then repeatedly washed with hot water and finally dried.

A blue coloured powder of a green tone was obtained which, under elementary analysis, gave the following results:

| | |
|---|---|
| Inorganic ashes=76.6% | H=2.54% |
| Cu=0.51% | N=1.7% |
| C=5.55% | S=0.98% |

The composite pigment, under X-ray examination, revealed to consist of amorphous particles.

This powdery pigment, in application in stoving enamels and in polyvinyl chloride, gives products of a blue color with a green tone, perfectly transparent, endowed with excellent fastness characteristics and photostability (light fastness).

Example 8

The preparation of the composite silanic pigment of Example 4 was repeated, but using the silanic phthalocyanine dye obtained according to Example 2 instead of that according to Example 1.

A blue powder was obtained which, upon elementary analysis, gave the following results:

| | |
|---|---|
| Inorganic ashes=69.32% | H=1.8% |
| Cu=1.3% | N=4.22% |
| C=12.01% | S=2.86% |

Under X-ray examination, the resulting powder showed the same crystallinity as that of the product obtained in Example 4.

When used in alkydic stoving enamels and in polyvinyl chloride, it gives products of a pure blue color, with general fastness characteristics similar to those of the product of Example 4 and with a good dispersability.

Example 9

The preparation of the composite silanic pigment of Example 7 was repeated, but using the silanic phthalocyanine dye obtained according to Example 2 instead of the dye of Example 1.

A blue coloured powder was obtained which, under analysis, gave the following results:

| | |
|---|---|
| Inorganic ashes=64.82% | H=2.32% |
| Cu=1.93% | N=3.38% |
| C=10.7% | S=2.83% |

Under X-ray examination, the powder turned out to be constituted of amorphous particles, analogous to the product obtained in Example 7.

When used in alkydic stoving enamels, it yields a perfectly transparent product of a blue colour with a shade of green.

Example 10

The preparation of the composite silanic pigment of Example 6 was repeated, but using the silanic phthalocyanine dye obtained according to Example 2 instead of that of Example 1.

A blue coloured powder was obtained which, under analysis, gave the following results:

| | |
|---|---|
| Inorganic ashes=70.35% | H=1.69% |
| Cu=2.69% | N=3.59% |
| C=11.43% | S=3.14% |

The thus obtained powder showed, under X-ray examination, crystalline characteristics and general fastness properties, in applications in stoving alkydic enamels and in P.V.C., that are quite analogous to those of the product obtained in Example 6, but with a blue colour analogous to that of the product of Example 8.

Example 11

The preparation of the composite silanic pigment of Example 10 was repeated, but using 1.7 ml of a sodium silicate solution instead of 2.1 ml.

A blue coloured powder was obtained which, under analysis, gave the following results:

| | |
|---|---|
| Inorganic ashes=70.35% | H=1.1% |
| Cu=4.77% | N=3.26% |
| C=10.23% | S=2.64% |

The powder, after grinding, when applied to alkydic stoving enamels, yields a blue colour product having a particular hiding power, an excellent fastness to light and an excellent resistance to overcoating.

Example 12

The preparation of the composite silanic pigment of Example 4 was repeated but using the silanic phthalocyanine dye obtained according to Example 3 instead of the dye of Example 1.

A deep green coloured powder was obtained which showed pigmentary, hiding power, dyeing power, overall fastness and diffractometric characteristics analogous to those of the pigment of Example 4, except for a deep green colour in the applications in alkydic enamels and in polyvinylchloride.

Example 13

The preparation of the composite silanic pigment of Example 7 was repeated, but using the silanic dye of Example 3 instead of that of Example 1.

A transparent composite pigment was obtained, a deep blue colour with a green shade, of good overall fastness.

Example 14

One gram of the composite pigment obtained according to Example 4, suspended in 100 ml of xylene, was heated at the reflux temperature of the solvent for 4 hours, then cooled, filtered and finally washed with n-heptane and dried.

The pigment thus treated did not show any variation with respect to the untreated pigment, with regard to the crystallinity, under X-ray examination, the particle size at the electronic microscope, the tone and the dyeing power in applications in stoving enamels. The pigment thus proved particularly stable to crystallization.

On the contrary, a pigment prepared by simple grinding the inorganic substrate (A) of Example 4 with an equal quantity of pigmentary copper phthalocyanine of the beta-type free of silanic groups, showed a variation in the characteristics when subjected to said treatment.

More particularly, it was noted, under X-ray examination, that there was a variation in the amplitude and intensity of the crystalline bands, due to the growth of the crystals while in the application in stoving enamels a drastic reduction of the dyeing power and a sensible graying of the shade.

Moreover, a pigment prepared by grinding in the same way as the preceding one, but utilizing a pigmentary phthalocyanine of the alpha-type, when subjected to the above mentioned treatment, under X-ray examination will show a crystallinity different from the initial alpha-type and typical of the beta-type, with a consequential sensible variation in shade in the applications in stoving enamels.

Example 15 (applications in PVC)

In a mixer with rotary arms were mixed together at 7°C:

1.0 parts of a previously ground pigment obtained according to Example 4;
100 parts of polyvinyl chloride in a powdery form (PVC);
1.5 parts of calcium stearate with a complexing function and stabilizing action;
3.0 parts of epoxydized soyabean oil;
0.5 parts of lubricant (mixture of glycerides with from $C_{16}$ to $C_{36}$);
2.0 parts of $TiO_2$.

The mixture thus obtained was treated at 180°C in a three-cylinder refiner, until a complete dispersion of the pigment was achieved, in order to obtain a turquoise coloured sheet, with a high hiding power, good color intensity, good dyeing power, good heat resistance and excellent fastness to migration and to light.

Example 16 (application in enamels):

5.0 parts of the pigment obtained according to Example 4, were mixed together by grinding with 95.0 parts of a fluid vehicle of the following composition:

22% of alkyd resin
19% of melamine resin
59% of xylene.

The homogenization is carried out in a ball mill, by grinding the mixture in the presence of porcelaine balls of 10 mm diameter, for the duration of 24 hours.

The enamel thus obtained was applied to the surface to be painted. It was allowed to dry overnight and then was kept in an oven for 30 minutes at 120°—125°C.

A turquoise colour paint was obtained presenting an excellent hiding power, excellent fastness to light and overcoating as well as good dyeing power.

In order to obtain a paint of a lighter shade and of a stronger hiding power, 1 part of the enamel obtained as indicated herein-above was further diluted with 9 parts of a synthetic white stoving enamel (10% $TiO_2$) of the following composition:

30% alkyd resin,
27% melamine resin,
33% xylene and
10% $TiO_2$

The homogenization was carried out in a ball mill by grinding the mixture in the presence of porcelain balls of 10 mm diameter, for 24 hours.

The cut enamel thus obtained was applied to the surface to be painted. It was allowed to dry overnight and was then placed in an oven at 120°—125°C for 30 minutes.

A light green varnish with a strong blue shade was thus obtained with excellent general fastness and strong hiding power.

Example 17 (application in polystyrene)

0.04 g of pigment obtained according to Example 4 and preliminarily ground, were added to 100 g of polystyrene (Edistir NA®, registered Montedison trade mark) that had been previously dried and then calendered for 5 minutes at 160°C.

The coloured material was thereupon cut up and crushed in a toothed wheel crusher.

In order to evaluate the tone, dyeing power and thermostability, formings were carried out at 200°C and 260°C on a press manufactured by Carver.

Formed pieces of a turquoise colour were thus obtained with good hiding power and characterized by good thermostability and light fastness.

Example 18 (Dyeing of cotton)

0.1 g of dye obtained according to Example 1, were dissolved in 200 ml of hot water. The dissolution of the dye was promoted by bringing the solution to a pH equal to 9 by the addition of $Na_2CO_3$. To the solution were then added 2 grams of technical sodium sulphate and the whole was brought to 60°C.

Into said solution, 5 g of a cotton fabric was immersed and dyeing was started in a Ahiba mod. Texomat® apparatus, bringing the temperature in 30 minutes to 95°C and maintaining the same for 1 hour. The fabric was then abundantly rinsed in water at room temperature and finally dried.

A blue-turquoise coloured fabric was obtained with good overall fastness characteristics and excellent photostability.

Example 19 (Dyeing of wool)

0.1 g of dye obtained according to Example 1, were dissolved in 200 ml of hot water.

To this solution were then added 0.5 g of sodium sulphate and 0.2 ml of a 50% acetic acid, until a pH of 4.5 was achieved.

Into the solution, heated to 60°C, were then immersed 5 g of a woollen fabric. The dyeing was carried out in a Ahiba Mod. Texomat® apparatus, bringing the temperature to 90°C in 30 minutes and the pH to 4 by means of a acetic acid, and then by maintaining these conditions for 30 minutes.

The fabric, after an abundant rinsing with water at room temperature and subsequent drying,

displayed a blue-turquoise colour and was characterized by good overall fastness and excellent photostability.

**Claims**

1. Phthalocyanine dyes containing at least one silanic group having the formula:

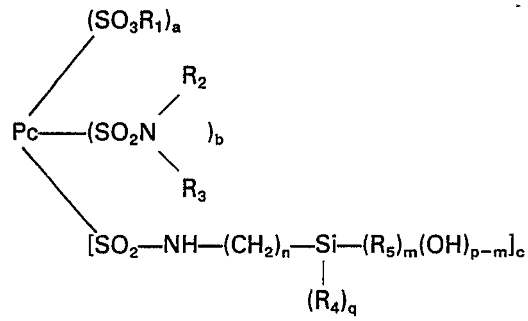

(I)

wherein:

Pc is the residue of the phthalocyanine, possibly metallized with Co, Ni, Cu;

$R_1$ is a hydrogen atom or an alkaline metal;

$R_2$ and $R_3$, either equal to or different from each other, are H, alkyls having up to 4 carbon atoms, cycloalkyls or aryls;

$R_4$ is a $C_1$—$C_4$ alkyl or a phenyl;

$R_5$ is a $C_1$—$C_4$ alkoxyl;

*n* is 3, 4 or 5;

*q* is 0, 1;

*p* and *m* are such integers that when Q=0, p is 3 and m is 0, 1, 2, 3 and when q is 1, p is 2 and m is 0, 1, 2;

a and c are numbers comprised between 1 and 3; and

b is a number comprised between 0 and 2, chosen in such a way that the sum of a+b+c will be $\leqq 4$; and wherein each of the four benzenic rings of the phthalocyanine is bound to only one single sulphonic ($-SO_3R_1$) or sulphonamidic group.

2. Silanic phthalocyanine dyes according to Claim 1, having the formula:

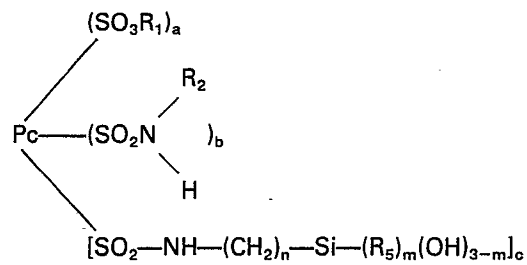

wherein:

Pc is the residue of the phthalocyanine metallized with Cu, Ni, Co;

$R_2$ is H, methyl, ethyl, propyl;

$R_5$, $R_1$, $R_2$, and a, b, c, n and m have the meanings given them in Claim 1.

3. Process for the preparation of the dyes defined in Claim 1, by reacting a chloride of a phthalocyanine-sulphonic acid of formula:

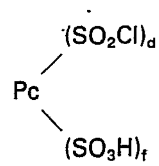

(II)

wherein:

Pc has the meaning given in Claim 1;

f is a number comprised between 0 and 2;

d is a number comprised between 2 and 4;

f and d being chosen in such a way whereby their sum be lower or equal to 4;

with a compound of formula:

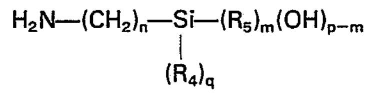

(III)

wherein:

n, $R_4$, $R_5$, q, m and p have the meanings given them in Claim 1, and possibly with a compound of the formula:

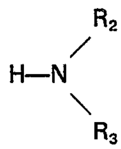

(IV)

wherein:

$R_2$ and $R_3$ have the meanings given them in Claim 1, according to a molar ratio (II):(III) comprised between 1 and 4, and possibly in a molar ratio between compounds (IV) and (II) comprised between 1 and 10, in a reaction medium consisting of water and/or organic solvents, at a temperature comprised between 5°C and the reflux temperature of the reaction medium, for 1—12 hours.

4. Process according to Claim 3, characterized in that the amino-alkoxysilanes of formula (III) are chosen from a group comprising: gamma-amino-propyl-triethoxysilane, delta-aminobutyl-phenyl-diethoxysilane, gamma-amino-propyl-methyldiethoxysilane, delta-amino-butyl-triethoxysilane.

5. Process according to Claim 3, characterized in that the amines of formula (IV) are chosen from among: ammonia, methylamine, ethylamine, propylamine, benzylamine, aniline, morpholine, cyclohexylamine.

6. Process according to Claim 3, characterized in that the organic solvent is chosen from the group of dimethylformamide, dioxane, acetonitrile, xylene and dichlorobenzene.

7. Process according to Claim 3, characterized in that the reaction between compounds (II), (III) and (IV) is conducted in the presence of a hydrochloric acid acceptor compound.

8. Process according to Claim 7, characterized in that the hydrochloric acid acceptor compound is chosen from among: $Na_2CO_3$, $NaHCO_3$, triethylamine and pyridine.

9. Composite silanic pigments consisting of the silanic phthalocyanine dyes of Claims 1 and 2, grafted on an inorganic support chosen from among: $TiO_2$ gel, semi-crystalline, rutile or anatase, mixtures of $TiO_2$ with $SiO_2$ and/or $Al_2O_3$, $SiO_2$ and/or $Al_2O_3$ finely comminuted, having a specific surface comprised between 5 and 500 sq.mt/g, but preferably comprised between 10 and 200 sq.mt/g.

10. Composite silanic pigments according to Claim 9, containing from 10 to 50% by weight of the silanic dye of formula (I) in a grafted form.

11. Process for preparing the composite silanic pigments as defined in Claim 9, characterized in that the inorganic support is made to react with a phthalocyanine dye of formula (I) in a reaction medium consisting of water and/or inert organic solvents, at a temperature comprised between 20°C and the reflux temperature of the reaction medium, then in separating the pigment by filtering and subsequent washing and finally by drying the pigment.

12. Process according to Claim 11, characterized in that the composite pigment, separated by filtering, is subjected to a dry thermal treatment in an oven at 60°—110°C for 4—8 hours before washing.

13. Process according to Claim 11, characterized in that the reaction is conducted in the presence of catalysts chosen from among: LiOH, $CF_3COOH$, lead acetate and cobalt naphthenate.

14. Process accogding to Claim 11, characterized in that the reaction is carried out in the presence of a compound chosen from among tetraalkoxysilanes containing up to 4 carbon atoms, vinyltriethoxysilane and the alkylorthotitanates, according to a ratio by weight with respect to dye (I) comprised between 0.1:1 and 1:1.

15. Natural fibres dye with silanic phthalocyanine dyes as claimed in Claims 1 and 2.

16. Plastic materials, varnishes, stoving enamels, inks, printing pastes for fabrics when dyed with the composite silanic pigments as claimed in Claim 9.

**Patentansprüche**

1. Phthalozyaninfarbstoffe, die wenigstens eine Silangruppe gemäss der Formel

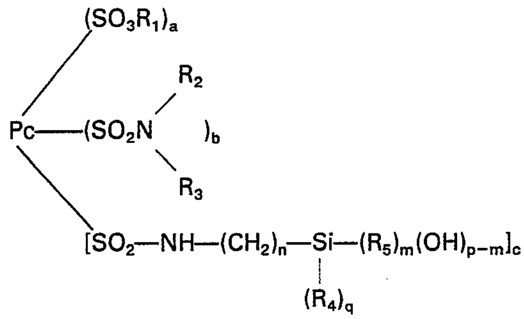

(I)

enthalten, wobei:

Pc=ein gegebenenfalls mit einem Metall, wie Co, Ni oder Cu, verbundener Phthalozyaninrest;

$R_1$=ein Wasserstoffatom oder ein Alkalimetall;

$R_2$ oder $R_3$ einander gleich oder verschieden=H, Alkyl mit höchstens vier Kohlenstoffatomen, Zykloalkyl oder Aryl;

$R_4$=Alkyl oder Phenyl mit 1 bis 4 Kohlenstoffatomen;

$R_5$=Alkoxyl mit 1 bis 4 Kohlenstoffatomen;

n=3, 4 oder 5;

q=0 oder 1; und wobei p und m ganze Zahlen sind, derart, dass wenn q gleich 0 ist, p=3 und m=0, 1, 2 oder 3, und dass, wenn q gleich 1 ist, p=2 und m=0, 1 oder 2;

a und c=ganze Zahlen zwischen 1 und 3;

b=eine ganze Zahl zwischen 0 und 2, derart gewählt, dass die Summe a+b+c gleich oder kleiner als 4 ist;

und wobei die vier Benzolringe des Phthalozyanins je an eine einzige Sulfongruppe ($—SO_3R_1$) oder Sulfonamidgruppe gebunden sind.

2. Silan Phthalozyaninfarbstoffe nach Anspruch 1, gemäss der Formel

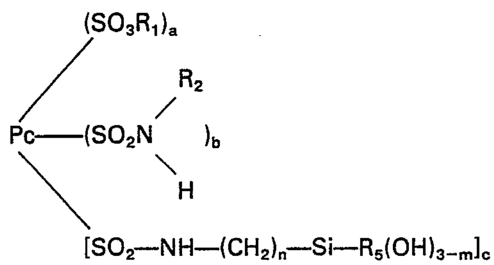

wobei:

Pc=mit einem der Metalle Cu, Ni, Co kombinierter Phthalozyaninrest;

$R_2$=H, Methyl, Ethyl, Propyl;

und wobei $R_5$, $R_1$, $R_2$, a, b, c, n und m jeweils die in Anspruch 1 angegebene Bedeutung haben.

3. Verfahren zur Herstellung des Farbstoffes gemäss Anspruch 1 vermittels der Reaktion eines Chlorids einer Phthalozyaninsäure mit der Formel

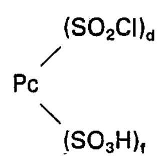

(II)

wobei:

Pc die in Anspruch 1 angegebene Bedeutung hat;

f=eine Zahl zwischen 0 und 2;

d=eine Zahl zwischen 2 und 4;

und wobei f und d derart gewählt werden, dass ihre Summe gleich oder kleiner als 4 ist; mit einer Verbindung gemäss der Formel

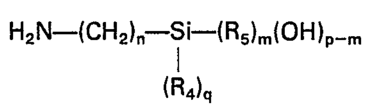

(III)

während n, $R_4$, $R_5$, q, m und p jeweils die in Anspruch 1 angegebene Bedeutung haben; sowie gegebenenfalls durch Reaktion mit einer Verbindung gemäss der Formel

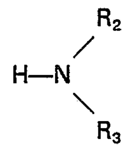

(IV)

wobei $R_2$ und $R_3$ die in Anspruch 1 angegebene Bedeutung haben; und wobei diese Reaktion derart durchgeführt wird, dass das Molverhältnis (II):(III) 1 bis 4 beträgt und gegebenenfalls das Molverhältnis zwischen den Verbindungen (IV) und (II) 1 bis 10 beträgt, während das Reaktionsmedium aus Wasser und/oder organischen Lösungsmitteln besteht, die Reaktionstemperatur zwischen 5°C und der Rückflusstemperatur des Reaktionsmediums liegt, und die Raktionsdauer zwischen 1 Stunde und 12 Stunden beträgt.

4. Verfahren nach Anspruch 3, dadurch gekennzeichnet, dass die Amino-alkoxysilane nach Formel (III) unter den Verbindungen folgender Gruppe gewählt werden: Gamma-amino-propyl-triethoxysilan, Delta-amino-butyl-phenyl-diethoxysilan, Gamma-amino-propyl-methyl-diethoxysilan, Delta-amino-butyltriethoxsilan.

5. Verfahren nach Anspruch 3, dadurch gekennzeichnet, dass die Amine gemäss der Formel (IV) unter den Verbindungen folgender Gruppe gewählt werden: Ammoniak, Methylamin, Ethylamin, Propylamin, Benzylamin, Anilin, Morpholin, Zyklohexylamin.

6. Verfahren nach Anspruch 3, dadurch gekennzeichnet, dass das organische Lösungsmittel Dimethylformamid, Dioxan, Acetonitril, Xylol oder Dichlorbenzol ist.

7. Verfahren nach Anspruch 3, dadurch gekennzeichnet, dass die Reaktion zwischen den Verbindungen (II), (III) und (IV) in Gegenwart eines Chlorwasserstoffsäure-Akzeptors durchgeführt wird.

8. Verfahren nach Anspruch 7, dadurch gekennzeichnet, dass der Chlorwasserstoffsäure-Akzeptor eine Verbindung folgender Gruppe ist: $Na_2CO_3$, $NaHCO_3$, Triethylamin, Pyridin.

9. Misch-Silanfarbstoffe aus Silan-Phthalozyaninfarbstoffen nach Anspruch 1 und 2 bestehend, aufgeproft auf einen organischen Träger, der unter den Verbindungen folgender Gruppe gewählt ist: $TiO_2$-Gel, halbkristallin, rutil- oder anastaseförmig, Mischungen von $TiO_2$ mit $SiO_2$ und/oder $Al_2O_3$ in feinzerteilter Form, mit einer spezifischen Oberfläche von 5 bis 500 $m^2/g$, vorzugsweise von 10 bis 200 $m^2/g$.

10. Silan-Mischpigmente nach Anspruch 9, welche 10 bis 50 Gew.-% des Silanfarbstoffes gemäss Formel (I) in aufgepropfter Form enthalten.

11. Verfahren zur Herstellung von Silan-Mischpigmenten gemäss Anspruch 9, dadurch gekennzeichnet, dass man den organischen Träger mit einem Phthalozyaninfarbstoff gemäss Formel (I) in einem aus Wasser und/oder inerten organischen Lösungsmitteln bestehenden Reaktionsmedium bei einer Temperatur reagieren lässt, die zwischen 20°C und der Rückflusstemperatur des Reaktionsmediums liegt, und dass man sodann das Pigment durch Abfiltern und nachfolgendes Waschen abscheidet und danach trocknet.

12. Verfahren nach Anspruch 11, dadurch gekennzeichnet, dass das durch Filtierung abgeschiedene Pigment vor dem Washen einer vierstündigen b is achtstündigen Trocken-Wärmebehandlung in einem Ofen bei 60°C bis 110°C unterzogen wird.

13. Verfahren nach Anspruch 11, dadurch gekennzeichnet, dass man die Reaktion in Gegenwart von Katalysatoren durchführt, die unter den Verbindungen folgender Gruppe gewählt sind: LiOH, $CF_3COOH$, Bleiacetat und Kohaltnaphthenat.

14. Verfahren nach Anspruch 11, dadurch gekennzeichnet, dass die Reaktion in Anwesenheit einer his zu 4 Kohlenstoffatomen enthaltenden Tetra-alkoxysilanverbindung, in Anwesenheit von Vinyltriethoxysilan oder in Anwesenheit eines Alkyl-orthotitanats in einem Gewichtsverhältnis in Bezug auf den Farbstoff (I) durchgeführt wird, das zwischen 0,1: 1 und 1:1 liegt.

15. Naturfasern, die mit den Phthalozyaninfarbstoffen gemäss der Ansprüche 1 und 2 gefärbt sind.

16. Kunstoffe, Lacke, aufgebranntes Email, Tinten, Druckpasten für Textilstoffe, die vermittels der im Anspruch 9 definierten Silan-Mischpigmente gefärbe sind.

**Revendications**

1. Colorants à base de phtalocyanine renfermant au moins un groupe silane et correspondant à la formule:

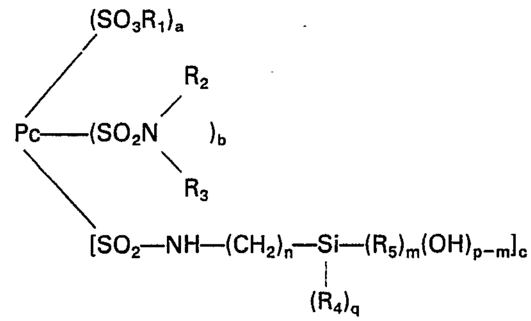

(I)

dans laquelle:

Pc est le reste de la phtalocyanine, éventuellement associée à un métal tel que Co, Ni, Cu;

$R_1$ est un atome d'hydrogène ou un métal alcalin;

$R_2$ et $R_3$, identiques ou différents, représentent H, des alkyles renfermant au maximum quatre atomes de carbone, des cycloalkyles ou des aryles;

$R_4$ est un phényle ou alkyle renfermant un à quatre atomes de carbone;

$R_6$ est un alcoxyle renfermant un à quatre atomes de carbone;

$n$ représente 3, 4 ou 5;

$q$ représente 0, 1;

$p$ et $m$ sont des nombres entiers choisis tels que, lorsque $q=0$, $p=3$ et $m=0$, 1, 2 ou 3, et que, lorsque $q=1$, $p=2$ et $m=0$, 1 ou 2; $a$ et $c$ sont des nombres compris entre 1 et 3; et

$b$ est un nombre compris entre 0 et 2 et est choisi tel que la somme a+b+c soit égale ou inférieure à 4; et dans laquelle chacun des quatre noyaux benzéniques de la phtalocyanine n'est lié qu'à un seul groupe sulfonique ($—SO_3R_1$) ou sulfonamide.

2. Colorants de phtalocyanine renfermant du silane, selon la revendication 1, qui correspondent à la formule:

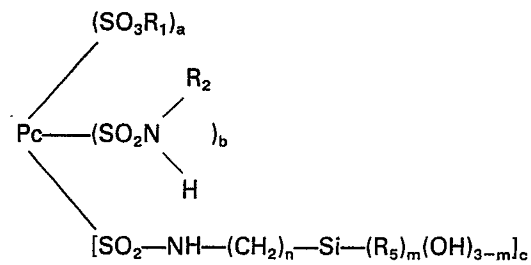

dans laquelle:

Pc est le reste de la phtalocyanine associé à un métal tel que Cu, Ni, Co;

$R_2$ est H, méthyle, éthyle, propyle;

$R_5$, $R_1$, $R_2$ et $a$, $b$, $c$, $n$ et $m$ ont les mêmes signifcations que celles indiquées dans la revendication 1.

3. Procédé de préparation des colorants définis dans la revendication 1, dans lequel on fait réagir un chlorure d'un acide phtalocyaninesulfonique de formule:

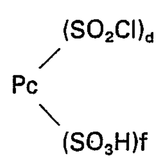

(II)

dans laquelle:

Pc a la signification indiquée dans la revendication 1;

$f$ est un nombre compris entre 0 et 2;

$d$ est un nombre compris entre 2 et 4;

$f$ et $d$ étant choisis tels que leur somme soit égale ou inférieure à 4,

avec un composé de formule:

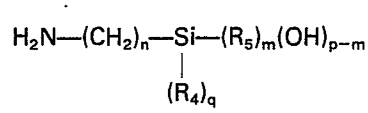

(III)

dans laquelle:

n, $R_4$, $R_5$, q, m et p ont les mêmes significations respectives que celles indiquées dans la revendication 1;

et éventuellement avec un composé de formule:

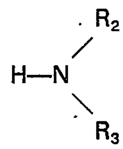

(IV)

dans laquelle:

$R_2$ et $R_3$ ont les significations indiquées dans la revendication 1, cette réaction étant mise en oeuvre avec un rapport molaire (II)/(III) compris entre 1 et 4, et, le cas échéant, un rapport molaire des composés (IV) et (II) compris entre 1 et 10, dans un mileiu constitué par de l'eau et/ou des solvants organiques, à une température comprise entre 5°C et la température de reflux dudit milieu, pendant une durée de 1 à 12 heures.

4. Procédé selon la revendication 3, caractérisé en ce qu'on choisit les amino-alcoxysilanes de formule (III) parmi les membres d'un groupe comprenant: gamma-aminopropyl-triéthoxysilane, delta-aminobutyl-phényl-diéthoxysilane, gamma-aminopropyl-méthyldiéthoxysilane, delta-aminobutyl-triéthoxysilane.

5. Procédé selon la revendication 3, caractérisé en ce que les amines de formule (IV) sont choisies parmi: ammonia, méthylamine, éthylamine, propylamine, benzylamine, aniline, morpholine, cyclohexylamine.

6. Procédé selon la revendication 3, caractérisé en ce que le solvant organique est choisi parmi les membres du groupe formé de: diméthylformamide, dioxanne, acétonitrile, xylène et dichlorobenzène.

7. Procédé selon la revendication 3, caractérisé en ce qu'on conduit la réaction entre les composés (II), (III) et (IV) en présence d'un composé accepteur de l'acide chlorhydrique.

8. Procédé selon la revendication 7, caractérisé en ce que ledit composé accepteur de l'acide chlorhydrique est choisi parmi $Na_2CO$, $NaHCO_3$, triéthylamine et pyridine.

9. Pigments composites renfermant du silane, constituées par les colorants de phtalocyanine au silane selon les revendications 1 et 2, greffés sur un support minéral choisi parmi: $TiO_2$ sous forme de gel, semi-cristalline, rutile ou anatase, mélanges de $TiO_2$ et de $SiO_2$ et/ou $Al_2O_3$, $SiO_2$ et/ou $Al_2O_3$ finement divisé, présentant une surface spécifique comprise entre 5 et 500 $m^2/g$, et de préférence comprise entre 10 et 200 $m^2/g$.

10. Pigments composites renfermant du silane selon la revendication 9, qui contiennent de 10 à 50% en poids du colorant silanique de formule (I) sous une forme greffée.

11. Procédé de préparation des pigments composites de silane tels que définis dans la revendication 9, caractérisé en ce qu'on fait réagir ledit support minéral avec un colorant de phtalocyanine de formule (I) dans un milieu constitué par de l'eau et/ou des solvants organiques, à une température comprise entre 20°C et la température de reflux dudit milieu, puis on sépare le pigment par filtration pour laver ensuite en enfin sécher ledit pigment.

12. Procédé selon la revendication 11, caractérisé en ce qu'on soumet le pigment composite, après sa séparation par filtration, à un traitement thermique à sec dans une étuve à une température de 60° à 110°C, pendant 4 à 8 heures, avant de la laver.

13. Procédé selon la revendication 11, caractérisé en ce qu'on conduit la réaction en présence de catalyseurs choisis parmi: LiOH, $CF_3COOH$, acétate de plomb et naphténate de cobalt.

14. Procédé selon la revendication 11, caractérisé en ce qu'on conduit la réaction en présence d'un composé choisi parmi les alkylorthotitanates renfermant, au plus, quatre atomes de carbone, dans une proportion pondérale par rapport au colorant (I) compris entre 0,1/1 et 1/1.

15. Fibres naturelles teintes à l'aide de colorants de silane et de phtalocyanine tels que revendiqués dans les revendications 1 et 2.

16. Matières plastiques, vernis, émail pour émaillage au four, encres, pâtes pour impression sur tissus, qui sont colorés à l'aide des pigments composites de silane tels que revendiqués dans la revendication 9.